Europäisches Patentamt

European Patent Office

Office européen des brevets

(19)

(11) Publication number: **0 361 893**
**A2**

## EUROPEAN PATENT APPLICATION

(21) Application number: **89309834.3**

(22) Date of filing: **27.09.89**

(51) Int. Cl.5: **B65D 81/34**

(30) Priority: **27.09.88 GB 8822684**

(43) Date of publication of application:
**04.04.90 Bulletin 90/14**

(84) Designated Contracting States:
**AT BE CH DE ES FR GB GR IT LI LU NL SE**

(71) Applicant: **DOCKER FOODS LIMITED**
**14 Southampton Place**
**London WC1A 2AJ(GB)**

(72) Inventor: **Docker John Frederick**
**Armscote Manor, Armscote**
**Stratford upon Avon, Warwickshire(GB)**

(74) Representative: **Lewis, Samuel Hewitt**
**FORRESTER & BOEHMERT**
**Widenmayerstrasse 4/I**
**D-8000 München 22(DE)**

(54) Method of preparing food and pack for use in the method.

(57) A food pack comprises an open-bottomed container (10) containing edible constituents (11,12) which are in distinct layers and which are both solid, whilst the pack is chilled or frozen. On heating, one of the layers liquifies. After heating, the container is lifted from the edible constituents to permit the liquified constituent to flow over or from beneath the other constituent.

EP 0 361 893 A2

## Method of preparing food and pack for use in the method

The present invention relates to the preparation of food which is cooked, then stored and/or transported and subsequently heated, before serving.

According to a first aspect of the present invention, there is provided a method of preparing food wherein a first mixture is cooked to form a constitutent which is solid at temperatures approaching 100°C, a second mixture is cooked separately from the first mixture to form a second constituent which is liquid at a temperature approaching 100°C and which can be gelled or solidified by chilling or freezing, the first and second constituents are brought together in a container to form distinct layers in the container, the combination of first and second constituents and the container is stored and/or transported in a chilled or frozen condition such that the second constitutent is in a jelled or solid condition, the combination is placed on an item of tableware with either the first or the second constituent exposed to said item through an opening in the container, the first and second constituents are heated together to liquify the second constituent and the container is removed from the first and second constituents, either before or after heating.

The invention facilitates serving of the food with the first constituent surrounded by the second constituent, but without these constituents being intimately mixed together. Thus, the food is presented to the consumer in a condition which is substantially the same as that attained by pouring a sauce over a solid constituent immediately before presentation to the consumer or by placing a solid constituent in a sauce immediately before presentation to the consumer.

The preparation of dishes which require only heating to an appropriate temperature prior to serving is known. Such dishes include examples containing a solid constituent and a constituent which is a liquid at the temperature at which the food is served. However, the known procedures involve intimately mixing solid and liquid constituents during or immediately following cooking and then chilling or freezing the mixture for storage and/or transporation. This procedure is suitable for certain dishes, for example a stew or a casserole dish, but is inappropriate for some dishes, for example a pie or pudding which is served together with a sauce. The generally accepted way of preparing such a dish involves pouring the sauce over the pie or pudding immediately before serving.

According to a second aspect of the invention, there is provided a pack for use in a method according to the first aspect, the pack comprising a container defining an opening at a bottom of the container and at least two edible constituents inside the container, a first of said constituents being one which is a solid at temperatures approaching 100°C and a second of the constituents being one which is a liquid at temperatures approaching 100°C, wherein the first and second constituents are in respective layers, one of which layers is adjacent to said opening and the other of which layers is spaced from the opening by the one layer.

Examples of packs embodying the second aspect of the invention and which are used in a method according to the first aspect will now be described, with reference to the accompanying drawing, wherein:-

FIGURE 1 shows a cross-section in a a vertical plane through a first pack;

FIGURE 2 shows a similar cross-section through a second pack; and

FIGURE 3 illustrates separation of a container of the pack of Figure 1 from the food thereof, preparatory to serving the food.

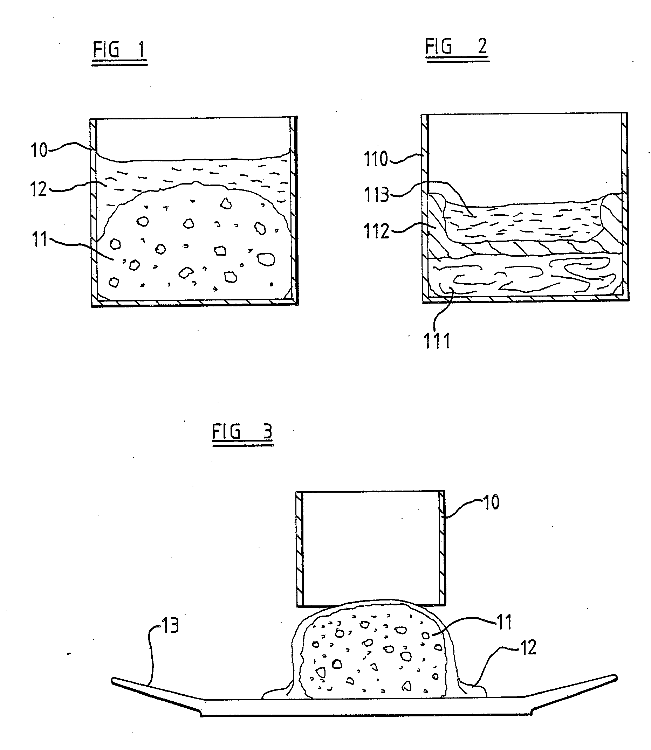

The pack of Figure 1 comprises a container 10 containing portions of two edible constituents 11, 12. These constituents form distinct layers, the layer 11 being a lowermost layer and the layer 12 being above the layer 11, in the example illustrated in Figure 1. The constituent 11 is one which is solid at temperatures approaching 100°C and at lower temperatures. This constituent is capable of substantially retaining its shape when separated from the container 10. Typically, the constituent 11 is a farinaceous constituent, for example a pudding. The constituent 11 may alternatively be mainly or comprise a substantial proportion of meat, fish or fruit.

The constituent 12 which forms the upper layer of the pack shown in Figure 1 is a sauce. This constituent is a liquid at elevated temperatures and can be caused to gell or solidify by cooling the constituent. By describing the constituent as being a liquid at elevated temperatures, we mean that the constituent will flow under its own weight at an elevated temperature which is less than 100°C. The constituent may include particles of solid or pieces of solid material. The constituent may be such that it gells, solidifies or stiffens so that it does not readily flow, when cooled to ambient temperature. Alternatively, the constituent may remain liquid when cooled to ambient temperature but gell or solidify when chilled to a temperature below ambient temperature or frozen. Typically, the constituent 12 will contain a much higher proportion of water than does the constituent 11, and will gell or solidify when cooled to 15°C.

The container 10 illustrated in Figure 1 is a tubular container and is open at both of its ends. The container may be of cylindrical form. The container is preferably formed of a material which is substantially transparent to microwaves. Paper and card are suitable materials from which to form the container.

The constituent 11 occupies fully a lower part of the container 10 and extends to the opening at the lower end thereof. The constituent 12 is spaced from both ends of the container. An upper part of the container may be occupied by air alone. It will be noted that the bottom of the container is entirely open. No part of the container is disposed beneath the constituent 11.

The constituent 11 is prepared by cooking a first mixture. This mixture may be cooked in the container 10 or in a mould and subsequently transferred to the container. The mixture from which the constituent 11 is prepared may be a fluent paste. After cooking, the constituent 11 is substantially shape-holding. The constituent 12 is prepared by cooking a further mixture, separately from the mixture which forms the constituent 11. The constituent 12 remains a liquid whilst it is at an elevated temperature, after cooking. The constituent 12 is poured into the container to form a layer on the top of the constituent 11. The combination of container and constituents 11 and 12 is then chilled or frozen so that the constituent 12 gels or solidifies. The combination may be wrapped in packaging material, either individually or together with several other, similar combinations of containers and edible constituents. Generally, the packaging will close both the top and the bottom of the container 10. The top of the container 10 may be closed by a lid or cover which is applied to the container 10 alone. Alternatively, a common lid or cover may be applied to a number of adjacent containers. Similarly, the bottom of the container 10 may be closed by a base which is associated with the container 10 alone or by a base which is common to a number of containers.

Since the constituent 12 is in a gelled or solid condition, whilst it remains chilled or frozen, the chilled or frozen pack can be transported and stored without the constituent 12 mingling significantly with the constituent 11.

Preparatory to being consumed, the constituents 11 and 12 are heated. The combination of edible constituents and container 10 is removed from the packaging and is placed on an item 13 of tableware with the bottom of the container and the constituent 11 resting on the tableware. Heating is conveniently carried out in a microwave oven and the temperature of at least the constituent 12 may be raised to a level in the region of 100°C. Such heating converts the constituent 12 to a liquid condition. However, the liquid is confined by the container 10. After heating, the package standing on the item of tableware is removed from the microwave oven. The container 10 is then lifted from the item of tableware and from the edible constituents 11 and 12 and is discarded. Removal of the container permits the liquid constituent 12 to flow down the constituent 11 onto the item of tableware, so coating the exterior of the constituent 11 in substantially the same way as a sauce poured over the constituent 11 would coat that constituent. The food is then ready to be consumed and can be served to the consumer on the item of tableware 13.

In Figure 2, there is illustrated an example of a further pack which includes a container 110 substantially identical with the container 10 and containing at the bottom of the container a layer 111 of an edible constituent which is in a gelled or solid condition, when maintained at a temperature of 0°C but which can be converted to a liquid condition by heating to a substantially higher temperature, for example a temperature of 50°C.

Above the layer 111, there is a layer 112 formed of a second constituent which is a solid at temperatures upto 50°C and which preferably remains solid, even if heated to 100°C. The constituent 12 may be a pastry or other farinaceous composition. Above the constituent 112, there is a further constituent 113 which also may be a constituent which is gelled or solid, whilst maintained at a temperature not exceeding 0°C, but which can be converted to a liquid condition by heating to a substantially higher temperature, for example 50°C.

The constituents 111, 112 and 113 are preferably cooked separately from each other. Typically, at the cooking temperature, both the constituents 111 and 113 will be liquids. The constituent 112 may be cooked in the container 110 or may be cooked in a separate mould. The constituents are brought together in the container 111 either before or after chilling or freezing. Whilst the combination of container 111 and the three edible constituents is maintained in a chilled or frozen condition, all of the constituents remain in a gelled or solid condition. The pack can conveniently be transported and stored in this condition.

The top and/or the bottom of the container 110 may be temporarily closed by packaging which protects the edible constituents during transport and storage. The packaging is removed, prior to heating of the pack for consumption of the edible constituents. After the packaging has been removed, the container is placed on an item of tableware with the constituent 111 in contact with or adjacent to the tableware. The edible constituents are then heated to liquify the constituents 111 and 113. The container 10, if present during heating, confines at least the constituent 111 to a position directly beneath the constituent 112. After heating of the edible constituents, the container 110 is lifted from the item of tableware so that the liquid constituent 111 is permitted to flow over the surface of that item. As shown in Figure 2, the constituent 112 may form a rim which retains the liquid constituent 113. Alternatively, the constituent 113 also may be confined by the container 110, whilst the container is present, and then permitted to flow down the constituent 112, when the container is removed. It will be appreciated that the container 110 could alternatively be removed before heating of the edible constituents.

## Claims

1. A method of preparing food wherein a first mixture is cooked to form a constituent which is solid at temperatures approaching 100°C, a second mixture is cooked separately from the first mixture to form a second constituent which is liquid at a temperature approaching 100°C and which can be gelled or solidified by chilling or freezing, the first and second constituents are brought together in a container to form distinct layers in the container, the combination of first and second constituents and the container is stored and/or transported in a chilled or frozen condition such that the second constituent is in a gelled or solid condition, the combination is placed on an item of tableware with either the first or the second constituent exposed to said item through an opening in the container, the first and second constituents are heated together to liquify the second constituent and the container is removed from the first and second constituents, either before or after heating.

2. A method according to Claim 1 wherein the constituents are heated whilst still in the container, the first constituent is adjacent to the item of tableware and the second constituent is above the first constituent and wherein the container is removed after heating to allow the second constituent to run down the first constituent to the item of tableware.

3. A pack for use in a method according to Claim 1 and comprising a container defining an opening at a bottom of the container and at least two edible constituents inside the container, a first of said constituents being one which is solid at temperatures up to 100°C, the second constituent being one which is liquid at temperatures approaching 100°C and wherein the first and second constituents are in distinct layers, one of which layers is adjacent to said opening and the other of which layers is spaced from the opening by the one layer.

4. A pack according to Claim 3 wherein the container defines an internal space which, when projected on to a surface at the opening, does not extend beyond the opening.

5. A pack according to Claim 5 wherein the container is cylindrical.

6. A pack according to Claim 3 wherein the container is open at opposite ends.

7. A pack according to Claim 3 wherein the container has an upper marginal portion which is spaced from both of said layers.

FIG 1

FIG 2

FIG 3